# EUROPÄISCHE PATENTANMELDUNG

(11) **EP 0 737 614 A1**
(43) Veröffentlichungstag der Anmeldung: **16.10.1996**
(21) Anmeldenummer: 96105421.0
(22) Anmeldetag: 04.04.1996
(51) Int. Cl.: B62H 5/02

(54) **Diebstahlsicherung für ein oder an einem Fahrrad**

(30) Priorität: 15.04.1995 DE 29506471 U; 22.03.1996 DE 29605355 U
(71) Anmelder: Miazga, Hans, 94342 Strasskirchen (DE); Beck, Günther, 94469 Deggendorf (DE)
(72) Erfinder: Miazga, Hans, 94342 Strasskirchen (DE); Beck, Günther, 94469 Deggendorf (DE)
(74) Vertreter: Richter, Bernhard, Dipl.-Ing.

(57) **Zusammenfassung**

Die Erfindung geht aus von einer Diebstahlsicherung für ein oder an einem Fahrrad, dessen Vorderradgabel an einer in einem vorderen Rahmenrohr (1) gelagerten Lenksäule (4) befestigt ist, mit einem am Fahrrad fest montierten Schloß (13), das in gesperrtem Zustand die Relativbewegung zwischen Rahmenrohr (1) und Lenksäule (4) durch eine formschlüssig in eine Ausnehmung (15) eingreifende Sperrklinke (14) verhindert, wobei das Schloß am oberen Ende des die Lenksäule lagernden Rahmenrohres und zusammen mit dem Lenksäulenlager montiert ist, das zwei Lagerschalen (2, 6) aufweist, von denen die obere Lagerschale (6) drehfest an der Lenksäule (4) und die untere Lagerschale (2) drehfest am Rahmenrohr (1) gehalten oder befestigt ist und wobei ferner eine Kontermutter (5) vorgesehen ist, die auf ein Gewinde (8) der Lenksäule aufgeschraubt ist und die obere Lagerschale in ihrer Betriebsstellung festhält und gegen eine etwaige Verdrehung sichert. Um zu verhindern, daß ein Dieb die Möglichkeit hat, durch ein Verdrehen der Kontermutter die Diebstahlsicherung wirkungslos zu machen ist vorgesehen, daß das Schloß (13) funktionsmäßig zwischen der Kontermutter (5) und der unteren Lagerschale (2) vorgesehen ist, so daß es in seiner Sperrstellung die Kontermutter und die untere Lagerschale gegen eine Relativverdrehung zueinander um die Längsachse (A-A) der Lenksäule (3) blockiert.

## Beschreibung

Die Erfindung betrifft eine Diebstahlsicherung für ein oder an einem Fahrrad, dessen Vorderradgabel an einer in einem vorderen Rahmenrohr gelagerten Lenksäule befestigt ist, mit einem am Fahrrad fest montierten Schloß, das in gesperrtem Zustand die Relativbewegung zwischen Rahmenrohr und Lenksäule durch eine formschlüssig in eine Ausnehmung (Schloßfalle) eingreifende Sperrklinke verhindert, wobei das Schloß am oberen Ende des die Lenksäule lagernden Rahmenrohres und zusammen mit dem Lenksäulenlager montiert ist, das zwei Lagerschalen aufweist, von denen die obere Lagerschale dreh fest an der Lenksäule und die untere Lagerschale drehfest am Rahmenrohr gehalten oder befestigt ist und wobei ferner eine Kontermutter vorgesehen ist, die auf ein Gewinde der Lenksäule aufgeschraubt ist und die obere Lagerschale in ihrer Betriebsstellung festhält und gegen eine etwaige Verdrehung sichert (Oberbegriff des Anspruches 1). Eine solche Diebstahlsicherung ist aus DE-PS 34 39 412 bekannt. Dabei befindet sich der Schließmechanismus des Schlosses an einer der Lagerschalen, während die andere Lagerschale eine oder mehrere Ausnehmungen für die Aufnahme der Sperrklinke des Schlosses in der Schließlage aufweist. Durch einen Dieb kann die Kontermutter soweit gelöst und nach oben bewegt werden, daß ein entsprechendes Anheben der oberen Lagerschale soweit möglich ist, daß die Sperrklinke außer Eingriff mit der betreffenden Ausnehmung kommt. Damit ist die Sperrwirkung des Schlosses aufgehoben mit der Folge, daß die Lenksäule zum Rahmenrohr verdreht und das Fahrrad gefahren werden kann. Hiermit ist aber der Hauptzweck eines derartigen Schlosses, nämlich einem Dieb das Lenken des gestohlenen Fahrrades unmöglich zu machen, nicht mehr gegeben.

Demgegenüber besteht die Aufgabenstellung der Erfindung darin, eine Diebstahlsicherung gemäß dem vorstehenden Oberbegriff des Anspruches 1 so auszubilden, daß ein Dieb nicht die Möglichkeit hat, durch ein Verdrehen der Kontermutter die Diebstahlsicherung wirkungslos zu machen.

Die Lösung dieser Aufgabenstellung wird, ausgehend vom Oberbegriff des Anspruches 1 zunächst gemäß dem Kennzeichen des Anspruches 1 darin gesehen, daß das Schloß funktionsmäßig zwischen der Kontermutter und der unteren Lagerschale vorgesehen ist, so daß es in seiner Sperrstellung die Kontermutter und die untere Lagerschale gegen eine Relativverdrehung zueinander blockiert. Hiermit ist eine Sperrung der Lenksäule und damit des Lenkers zum Rahmenrohr gegeben und ferner gesichert. Somit ist die Kontermutter über das Schloß in dessen Sperrstellung so an der unteren Lagerschale gehalten, daß es dazu sich nicht verdrehen kann. Hiermit hat ein Dieb auch nicht die Möglichkeit, die Kontermutter durch ein Drehen zu lockern und damit die Diebstahlsicherung außer Funktion zu setzen.

Eine bevorzugte Ausführungsform der Erfindung ist Gegenstand des Anspruches 2. Die Kontermutter kann problemlos so gestaltet werden, daß sie den Schloßmechanismus trägt oder aufnimmt, während die untere Lagerschale aufgrund ihres Aufbaues und Form dafür geeignet ist eine Ausnehmung, bevorzugt mehrere über ihren Umfang verteilte Ausnehmungen für die Aufnahme der Sperrklinke aufzuweisen.

Die Erfindung befaßt sich u.a. ferner mit unterschiedlichen Gestaltungen der Sperrklinke der Kontermutter und der Lagerschalen. Zur Sicherung der Kontermutter in der Betriebslage ist gemäß Anspruch 10 eine Ausführung vorgesehen, bei der die Kontermutter in ihrer Betriebslage durch Anliegen mit entsprechendem Reibschluß an einer Beilagscheibe gehalten ist, die mit ihrer anderen Seite auf der oberen Lagerschale aufliegt. Bevorzugt diese greift hierbei Beilagscheibe mit einem Vorsprung in eine Ausnehmung der Lenksäule ein. Beim Auftreten sehr starker Verdrehkräfte am Lenker eines derart gesicherten Fahrzeuges kann es u.U. passieren, daß die vorgenannte Sicherung der Kontermutter in der Betriebslage so starken Kräften nicht standhält, indem entweder der vorgenannte Reibschluß nicht ausreicht oder der relativ kleine Vorsprung abbricht. In beiden vorgenannten Fällen würde die Konterung der oberen Lagerschale aufgehoben werden, so daß diese sich relativ zur Lenksäule verdrehen kann. Damit wird der Abstand zwischen den beiden Lagerschalen verändert. Dies kann entweder zu einem Verklemmen der Lagerkugeln oder dazu führen, daß diese mit zu viel Spiel zwischen den beiden Lagerschalen laufen. Auch ist damit die obere Lagerschale nicht mehr fest gehalten, so daß sie sich ebenfalls relativ zur Lenksäule verdrehen kann. In weiterer Ausgestaltung der Aufgaben- bzw. Problemstellung der Erfindung soll daher mit einfachen und wirksamen Mitteln dafür gesorgt werden, daß mit Hilfe der Kontermutter in einwandfreier und sicher wirkender Weise auch beim Auftreten sehr starker Verdrehkräfte am Lenker die obere Lagerschale nicht zur Lenksäule mehr verdrehbar ist.

Zur Lösung dieser weiteren Aufgaben- bzw. Problemstellung ist mit der Erfindung gemäß Anspruch 11 vorgesehen, daß entweder der untere Bereich der Kontermutter oder ein von der Kontermutter betätigtes Druckmittel den oberen Bereich der Lagerschale umgibt und in der Betriebsstellung mit Preßsitz in etwa radialer Richtung nach innen drückt und fest an der Lenksäule anklemmt. Damit wird ein so starkes Verklemmen der oberen Lagerschale mit der Lenksäule erreicht, daß auch bei einer mit großer Körperkraft auf den Lenker ausgeübten Verschwenkkraft dies nicht ausreicht, um diese Fixierung der Lagerschale an der Lenksäule zu überwinden. Dieses Verklemmen gemäß der Lehre des Anspruches 11 ist wesentlich stärker und sicherer als die o.g. Drehsicherung der Kontermutter gemäß Anspruch 10.

In einer bevorzugten Ausführungsform der Erfindung gemäß Anspruch 12 wird durch geschwächte Querschnitte und/oder durch Einschnitte die Erzielung und damit Stärke der Preßsitzverklemmung gemäß Anspruch 11 vergrößert. In dem Zusammenhang sind die Merkmale des Anspruches 13 eine konstruktiv einfache und im Ergebnis wirkungsvolle, bevorzugte Ausführung der Lehre nach Anspruch 11 und 12. Dies wird durch die Merkmale der Ansprüche 4 und 5 ergänzt und weiter gefördert.

Die Merkmale des Anspruches 16 erleichtern zum einen die Herstellung der oberen Lagerschale in ihrer Gesamtheit, da ein durchgehendes Innengewinde von der unteren bis zur oberen Stirnfläche vorgesehen werden kann. Außerdem hat ein solches Innengewinde des oberen Bereiches der oberen Lagerschale den im Sinne der Aufgabenstellung wesentlichen Vorteil, daß mit dem Anpreßdruck nach Anspruch 11 die Gewindegänge der oberen Lagerschale gegen die Gewindegänge der Lenksäule gepreßt werden, so daß die Flanken der jeweiligen Gewindezähne oder -aussparungen aneinander gepreßt sind. Dies hat eine wesentliche Verstärkung des Haltes der oberen Lagerschale relativ zur Lenksäule gegen etwaige, vom Lenker herrührende Verdrehkräfte zur Folge.

Die Merkmale des Anspruches 17 stellen eine fertigungstechnisch mit geringen Kosten und leicht zu montierende Anordung dar, um mittels einer sich konisch verjüngenden Anlagefläche den oberen Bereich der oberen Lagerschale gegen die Außenfläche der Lenksäule zu drücken. Dies ist besonders dann von Vorteil, wenn in dem Zusammenhang die Lehre des Anspruches 12 mit verwirklicht ist.

Anspruch 18 stellt eine bevorzugte und in der Fertigung leicht herstellbare Ausführungsform der Erfindung dar, die auch leicht zu montieren ist.

Weitere Vorteile und Merkmale der Erfindung sind den weiteren Unteransprüchen, auf deren Inhalt hiermit ausdrücklich Bezug genommen wird, sowie der nachfolgenden Beschreibung und der zugehörigen Zeichnung von erfindungsgemäßen Ausführungsmöglichkeiten zu entnehmen. In der Zeichnung zeigt:
- Fig. 1:: einen Längsschnitt gemäß dem Schnitt I-I in Fig. 3 durch einen Teil der Lenksäule und des Rahmenrohres mit einer montierten Diebstahlsicherung,
- Fig. 2:: die Anordnung nach Fig. 1 gesehen in Blickrichtung des Betrachters der Fig. 1,
- Fig. 3:: einen Schnitt gemäß der Linie III-III in Fig. 1 und 2, wobei die an sich oberhalb der Schnittlinie gelegenen Teile des Schlosses gestrichelt eingezeichnet und somit auch in dieser Ansicht mit dargestellt sind,
- Fig. 4:: einen Schnitt gemäß der Linie IV-IV in Fig. 1,
- Fig. 5:: eine Ansicht gemäß dem Pfeil V in Fig. 4,
- Fig. 6:: im verkleinerten Maßstab eine abgewandelte Ausführungsform der Erfindung in einem Längsschnitt,
- Fig. 7:: die Ansicht in Blickrichtung des Betrachters in Fig. 6.
- Fig. 8:: Eine weitere Ausführung der Erfindung in einem Längsschnitt durch Lenkstange, Lenksäule, Rahmenrohr und den Bauteilen der Diebstahlsicherung,
- Fig. 9:: die untere Lagerschale für sich in einem Längsschnitt entsprechend Fig. 8, sowie in einem Schnitt gemäß der Linie E-F in Fig. 10,
- Fig. 10:: die Draufsicht auf Fig. 9,
- Fig. 11:: die obere Lagerschale für sich in einer Schnittdarstellung gemäß Fig. 8, sowie einen Schnitt entsprechend der Linie C-D in Fig. 12,
- Fig. 12:: eine Draufsicht auf Fig. 4,
- Fig.13:: einen Spannring für sich in einer Schnittdarstellung entsprechend Fig. 8.

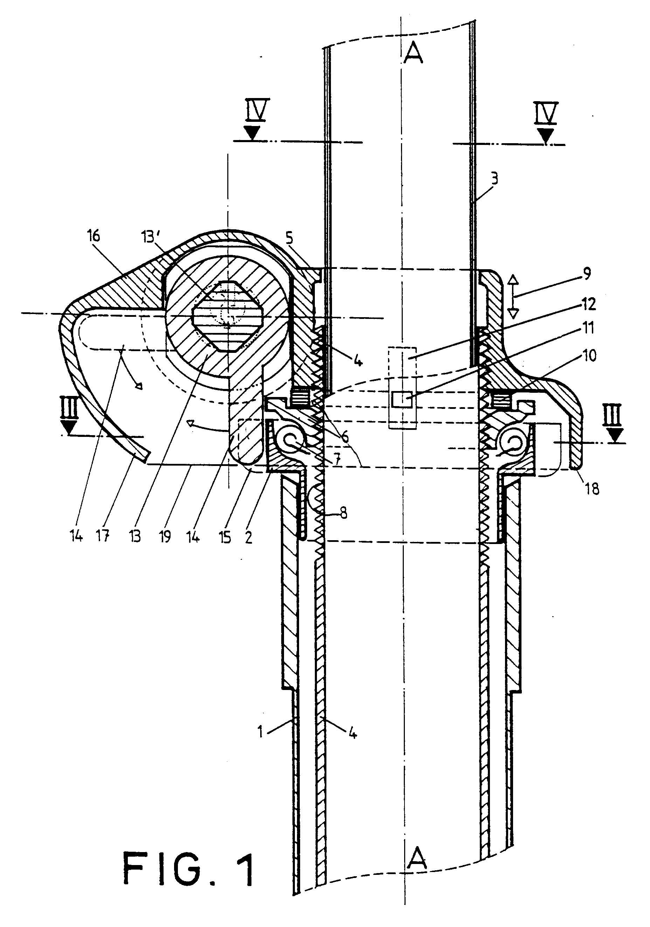

Die Zeichnungen, insbesondere Fig. 1, zeigen nur die für das Verständnis der Erfindung erforderlichen Teile. Ein Rahmenrohr 1 trägt an seinem oberen Ende eine mit ihm fest verbundene untere Lagerschale 2. Eine Lenkerstange 3 trägt an ihrem oberen, in der Zeichnung nicht dargestellten Ende den Lenker des Fahrrades und ist mit einer Lenksäule 4 drehfest durch eine in der Zeichnung nicht dargestellte aber bekannte und in der Praxis übliche Konus-Verschraubung drehfest verbunden. Das untere, in der Zeichnung nicht dargestellte Ende der Lenksäule 4 ist drehfest mit der Vorderradgabel verbunden. Bei normalem Fahr- und Lenkbetrieb ist der Lenker mit der Lenkerstange 3 und der Lenksäule 4 um die Längsachse A-A zu beiden Seiten hin verschwenkbar. Die an der Lenksäule 4 angebrachte Vorderradgabel bewegt entsprechend das Vorderrad. Für die Verschwenkung der Teile 3, 4 zum Rahmen 1 ist eine Lagerung bestehend aus den Lagerschalen 2 und 6 und dazwischen befindlichen Lagerkugeln 7 vorgesehen. Der für den sachgemäßen Betrieb erforderliche Abstand zwischen den beiden Lagerschalen wird durch Verdrehen der Lagerschale 6 erreicht, die mit einem Innengewinde in ein Außengewinde 8 der Lenksäule 4 eingreift. Mit ihrem Verdrehen wird die obere Lagerschale 6 hierzu entsprechend nach oben oder unten bewegt (siehe hierzu den Doppelpfeil 9).

Ferner ist zur Sicherung der eingestellten Position der oberen Lagerschale 6 eine Kontermutter 5 vorgesehen, die ebenfalls mit einem Innengewinde in das Außengewinde 8 der Lenksäule 4 eingreift und damit in der Pfeilrichtung 9 nach oben oder unten verlagert werden kann. Nach Herstellung des richtigen Abstandes zwischen den beiden Lagerschalen 2, 6 wird die Kontermutter soweit verdreht, daß sie mit genügender Kraft über eine Beilagscheibe 10 gegen die obere Lagerschale 6 drückt und diese gegen ein ungewolltes Verdrehen sichert. Die Beilagscheibe 10 kann mit einem Vorsprung 11 in an sich bekannter Weise in eine Ausnehmung 12 der Lenksäule 4 eingreifen. Somit ist die obere Lagerschale 6 durch ihren Eingriff in das Gewinde 8 und die Sicherung durch die Kontermutter zur Lenksäule 4 drehfest gehalten. Die untere Lagerschale 2 ist dreh fest am oberen Ende des Rahmenrohres 1 angebracht, z.B. angeschweißt.

Die Kontermutter hat hier zugleich die Funktion des Gehäuses für den Sperrmechanismus, der insbesondere als Zylinderschloß ausgebildet sein kann.

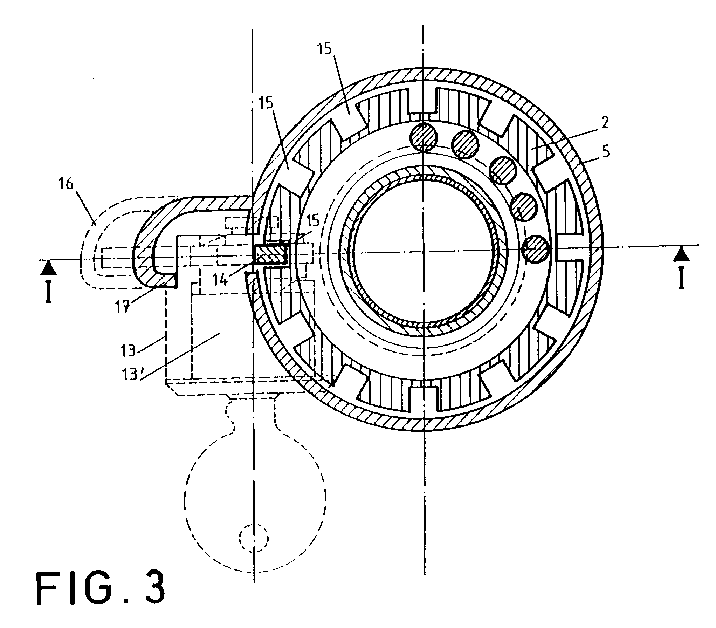

Das allgemein mit 13 bezeichnete Schloß ist funktionsmäßig zwischen der Kontermutter 5 und der unteren Lagerschale 2 angeordnet, so daß es in der in Fig. 1 mit durchgezogenen Linien gezeichneten Sperrlage die Kontermutter 5 und die untere Lagerschale 2 gegen ein Relativverdrehen zueinander um die Achse A-A sperrt, während in der mit gestrichelten Linien dargestellte Freigabestellung diese Sperrung aufgehoben ist. In dem dargestellten, bevorzugten Ausführungsbeispiel befindet sich der Schließmechanismus 13' des Schlosses innerhalb der Kontermutter 5. Er trägt eine Sperrklinke 14, die in diesem Ausführungsbeispiel der Erfindung verschwenkbar ist und je nach der Schwenk- bzw. Drehlage des Schlosses eine der beiden vorstehend genannten Positionen einnimmt. In der Sperrlage greift die Sperrklinke 14 in eine Ausnehmung 15 der unteren Lagerschale ein. Hierzu wird auch auf Fig. 3 verwiesen. Fig. 3 zeigt ferner, daß bevorzugt eine Reihe von Ausnehmungen 15 über den Umfang der unteren Lagerschale 2 verteilt in dieser vorgesehen ist und nach außen offen sind. Hiermit steht praktisch bei jeder Drehlage der Kontermutter eine Ausnehmung 15 in einer Position zur Verfügung, in der die Sperrklinke 14 in sie eingebracht werden kann. Der Schlüssel ist mit 20 beziffert.

Es ist ersichtlich, daß in der mit durchgezogenen Linien dargestellten Sperrlage ein Dieb nicht die Möglichkeit hat durch Lockern und Drehen der Kontermutter diese soweit nach oben zu verlagern, daß die Sperrklinke 14 aus der sie bisher aufnehmenden Ausnehmung 15 herausgenommen werden kann und somit die Lenksäule 3 relativ zum Rahmenrohr 1 um die Achse A-A verdrehbar ist.

Die Kontermutter 5 ist in dem Bereich, in dem sich die Sperrklinke 14 in der Freigabestellung befindet , mit einer nach außen gerichteten Auswölbung 16 versehen, die von oben her die Sperrklinke 14 in dieser Position umgreift und als mantelförmige Seitenwand 17 soweit nach unten/innen geführt ist, daß der Schließmechanismus und die Lagerschalen weitgehend gegen die Witterung und Verunreinigungen abgedeckt sind. Auch in ihrem übrigen Bereich ist die Kontermutter als Seitenwand 18 ausgebildet und dazu mantelförmig nach unten geführt. Sowohl der untere Wandbereich 17 der Auswölbung 16, als auch die vorgenannte Seitenwand 18 liegen mit ihrer Unterkante 19 im unteren Bereich der Lagerschale 2, so daß eine hinreichende Abdeckung gegeben ist.

Zusätzlich zu den schon erläuterten Vorteilen sind auch noch die Vorteile beibehalten, die beim Gegenstand des Standes der Technik gemäß DE-PS 34 39 412 gegeben sind. So müssen Lenksäule 3 und Rahmenrohr 1 nicht verändert werden. Es ist lediglich eine entsprechend ausgestaltete untere Lagerschale 2 und eine ebenfalls entsprechend ausgestaltete Kontermutter 5 vorzusehen. Man hat die Möglichkeit sowohl der nachträglichen Anbringung eines solchen Lenkradschlosses an schon vorhandene Fahrräder, als auch die der Anbringung bereits in der Fabrik. Gegenüber den Diebstahlsicherungen, die in die Speichen des Hinterrades eingreifen, besteht der an sich bekannte Vorteil, daß die Sperrwirkung aus dem Bereich des relativ empfindlichen Hinterrades in einen Bereich der Fahrradkonstruktion verlegt ist, der aufgrund der bei einem Fahrrad auftretenden Lastverteilung ohnehin sehr stabil ausgebildet ist, nämlich dem Bereich der Vorderradgabelhaltung. Ein solches Schloß trägt auch querschnittsmäßig nicht allzusehr auf und stört daher nicht den sportlichen Gesamteindruck des Fahrrades. Trotzdem sorgt die hiermit erreichte Nichtsteuerbarkeit des Fahrrades für eine einwandfreie Diebstahlsicherung.

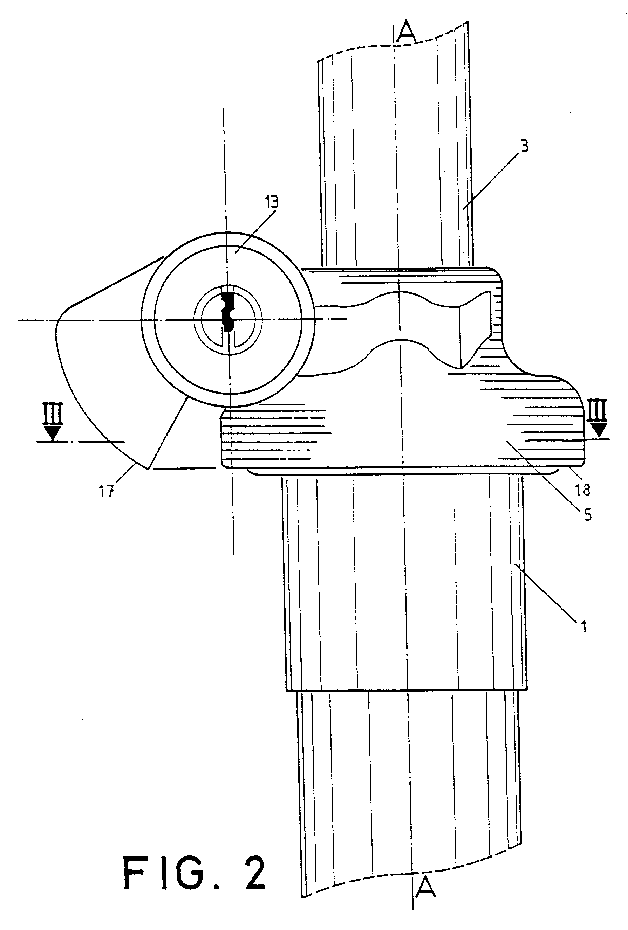

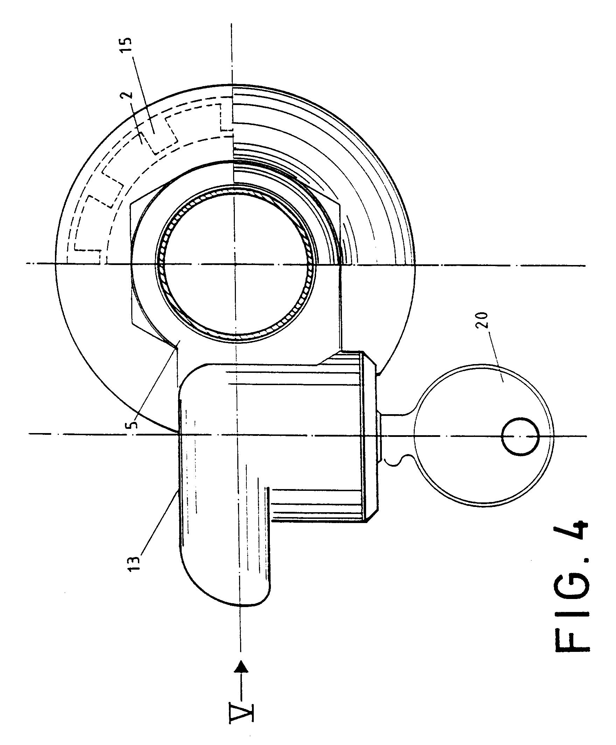

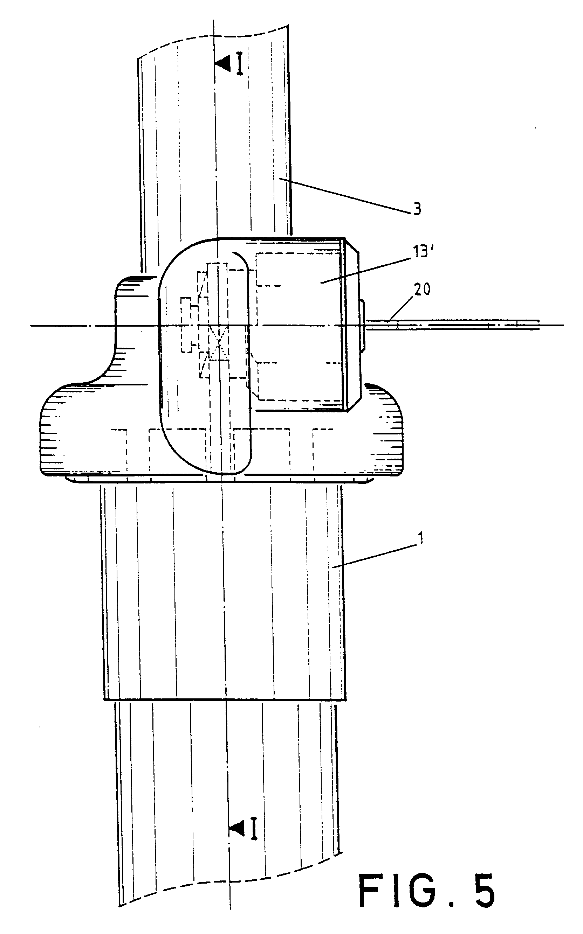

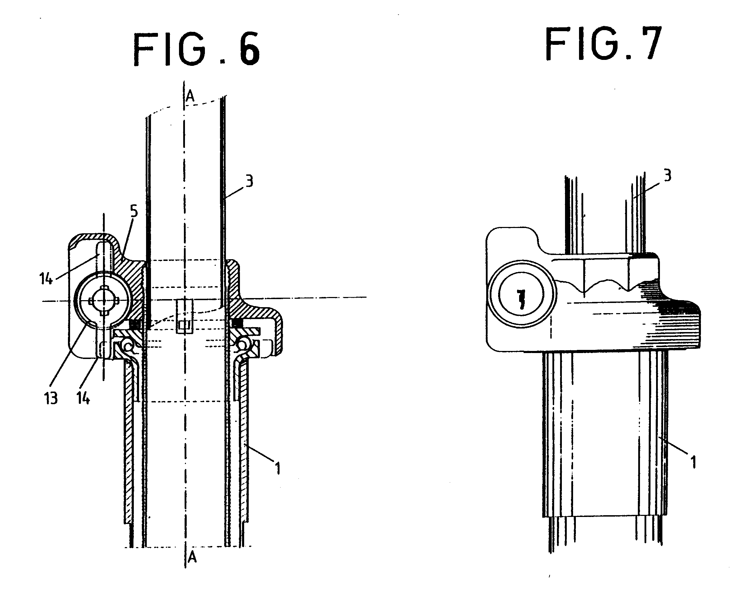

Fig. 6, 7 zeigen eine Variante der Erfindung, in der sich die Sperrklinke 14 aus der gestrichelten Freigabestellung in die mit durchgezogenen Linien dargestellte Sperrlage um 180° verschwenkt (während bei dem zuvor erläuterten Ausführungsbeispiel eine Verschwenkung der Sperrklinke um 90° erfolgt). Hierdurch ist die radiale Ausladung der Kontermutter 5 im Beispiel der Fig. 6, 7 etwas geringer als im Beispiel der Figuren 1 bis 5. Im übrigen hat sich an der Konstruktion des Ausführungsbeispieles der Fig. 6, 7 gegenüber der des vorhergehenden Ausführungsbeispieles nichts geändert.

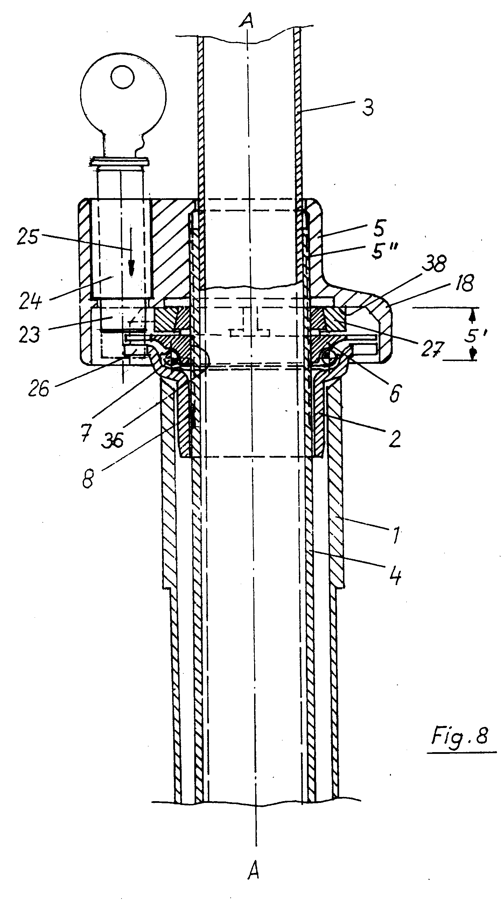

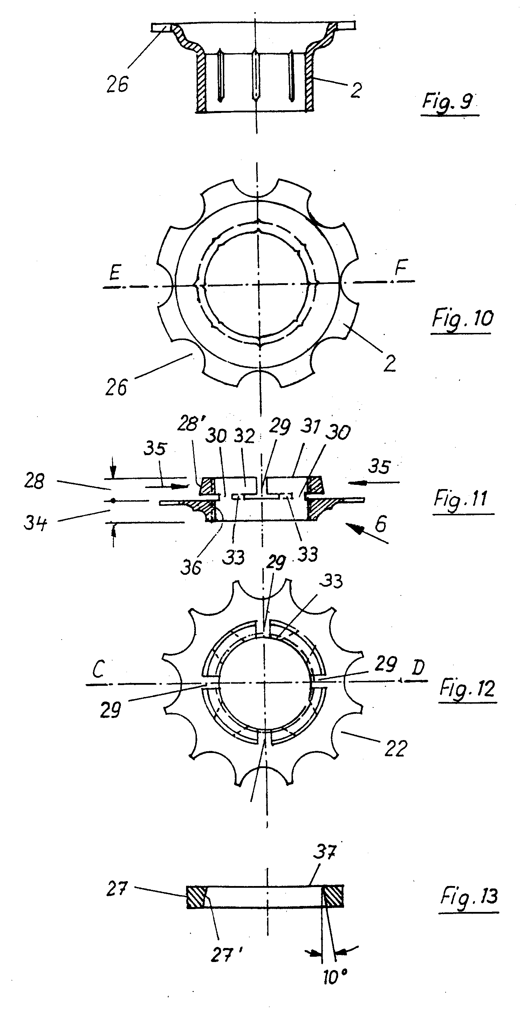

Die Figuren 8 bis 13 zeigen weitere Ausführungsmöglichkeiten der Erfindung. Dabei entsprechen wesentliche Bauteile der Fig. 8 den Bauteilen, die im Zusammenhang mit Fig. 1 erläutert worden sind und auch die gleichen Bezugsziffern wie die entsprechenden Bauteile in Fig. 1 tragen. Es wird daher zur Erläuterung der Fig. 8 insoweit auf die Ausführungen zu Fig. 1 verwiesen.

Zur Sicherung der eingestellten Position der oberen Lagerschale 6 ist auch hier eine Kontermutter 5 vorgesehen, die mit einem Innengewinde 5'' in das Außengewinde 8 der Lenksäule 4 eingreift. Sie kann also ebenfalls durch Verdrehen entsprechend dem Gewindeeingriff nach oben oder unten verlagert werden. Jedoch ist in diesem Ausführungsbeispiel die Sicherung der Kontermutter gegen ein ungewolltes Verdrehen anders und dabei stärker und sicherer als im vorhergehenden Ausführungsbeispiel ausgebildet, wie es vorstehend bereits erwähnt wurde und nachstehend im einzelnen erläutert ist:

Die obere Lagerschale ist im Detail in den Fig. 11 und 12 dargestellt. Sie besteht in ihrem oberen Bereich 28 aus einzelnen durch Einschnitte 29 voneinander getrennten Segmenten 32. Diese Segmente sind nur über ein relativ schmales Verbindungsstück 30 (siehe Fig. 11) mit dem unteren Bereich 34 dieser oberen Lagerschale 6 verbunden. Dies wird sowohl durch die sich von der Stirnfläche 31 der oberen Lagerschale her nach unten erstreckenden Einschnitte 20 erreicht, welche den Umfang des oberen Bereiches dieser Lagerschale eine entsprechende Anzahl, hier vier, Segmente 32, unterteilen. Ferner ist ersichtlich, daß von den Einschnitten 29 her in Umfangsrichtung verlaufende weitere Einschnitte 33 beim Übergang vom oberen Bereich 28 zum unteren Bereich 34 der oberen Lagerschale vorgesehen sind und somit zur Verbindung der Segmente 32 des oberen Bereiches 28 mit dem unteren Bereiches 34 nur die vorgenannten Stege 30 stehen lassen. Es ist ersichtlich, daß somit in der Radialrichtung nach innen gemäß den Pfeilen 35 auf die Segmente 32 wirkende Kräfte diese entsprechend nach innen biegen und damit gegen die Außenwand der Lenksäule 4 drücken. Hierdurch wird ein sehr fester Klemmsitz der oberen Lagerschale an der Lenksäule erreicht. Dieser Klemmsitz wird noch dadurch verstärkt, wenn das Innengewinde 36 der oberen Lagerschale sich an der Innenwand der Segmente 32 befindet, so daß dieser Klemmsitz noch durch das Ineinandergreifen der Gewinde 8 und 36 verstärkt wird.

Der vorstehend erläuterte Klemmsitz aufgrund der o.g. Kräfte (Pfeile 35) kann von dem unteren Bereich 5' der Kontermutter durch direkten Angriff an den Segmenten im Sinne der Erfindung erfolgen, beispielsweise durch eine oder mehrere konische Flächen (in der Zeichnung nicht dargestellt) . In dem vorliegenden, bevorzugten Ausführungsbeispiel der Erfindung ist hierzu ein Spannring 27 vorgesehen (Fig. 13), dessen Innenwand 27' sich von oben nach unten konisch erweitert. Sie liegt an der Außenwand 28' der Segmente 32 an, die sich von unten nach oben etwa entsprechend konisch verjüngt. Die Konizität kann, wie in Fig. 13 eingetragen, beispielsweise 10° betragen. Durch die Wahl der Steilheit der Konizität ist die Andruckkraft auf den oberen Bereich der oberen Lagerschale variierbar. Die Außenwand des Spannringes 27 kann zylindrisch sein. Wie Fig. 8 zeigt, liegt die Kontermutter 5 mit ihrer unteren Fläche 38 auf der oberen Stirnfläche 37 des Spannringes auf. Wird die Kontermutter so um die Lenksäule 4 gedreht, daß sie aufgrund des Gewindeeingriffes ihres Innengewindes 5'' in das Außengewinde 8 der Lenksäule sich relativ zur Lenksäule nach unten bewegt, so drückt sie den Spannring 27 nach unten. Aufgrund des Aneinanderliegens und der Konizität der Spannringinnenwand 27' und der Segmentaußenwände 28' werden mit dem Weiterbewegen des Spannringes nach unten die Segmente 32 leicht nach innen gedrückt und mit der Lenksäule fest verklemmt, wie vorstehend bereits im einzelnen erläutert. Damit ist einwandfrei gesichert, daß die obere Lagerschale 6 sich auch dann nicht um die Lenkstange oder Lenksäule verdrehen kann, wenn über den Lenker relativ starke Drehmomente auf die Lenkstange und damit die Lenksäule ausgeübt werden. Zugleich ist damit auch die notwendige Verdrehsicherheit zwischen Kontermutter 5 und oberer Lagerschale erreicht. Auch in diesem Ausführungsbeispiel umgibt der untere Bereich 5' der Kontermutter zumindest die obere Lagerschale 6, gegebenenfalls auch einen Teil der unteren Lagerschale 2. Wenn in der vorstehenden Beschreibung die Begriffe "oben" und "unten" gewählt sind, so ist hiermit zunächst auf die Position dieser Teile in der Zeichnung Bezug genommen. Dies entspricht aber auch der Position dieser Teile bei einem Fahrrad in normaler aufrechter Lage.

Im vorliegenden Ausführungsbeispiel ist die Sperrklinke als ein Sperrzapfen 23 ausgebildet, der durch Verschiebung in Richtung des Pfeiles 25 (siehe Fig. 8) in die Sperrlage bringbar ist. Hierzu zeigt Fig. 12, daß die obere Lagerschale 6 auf einem Kreisumfang verteilt Ausnehmungen 22 aufweist, die gemäß diesem Ausführungsbeispiel nach außen offen sind. Der radiale Abstand dieser Ausnehmungen 22 von der vorgenannten Längsachse A-A ist so auf den radialen Abstand der Mittellängsachse des Sperrzapfens 23 von dieser Längsachse A-A abgestimmt, daß die Ausnehmungen den Sperrzapfen aufnehmen können. Wird die Kontermutter 5 aufgeschraubt und hat etwa ihre Endlage erreicht, so ist dann nur noch darauf zu achten, daß der Sperrzapfen 23 des Schlosses 24 sich oberhalb einer dieser Aussparungen 22 befindet. Zur Herstellung der Schließlage der Diebstahlsicherung ist der Sperrzapfen lediglich in Richtung des Pfeiles 25 entlang seiner Mittellängsachse, die parallel zur o.g. Achse A-A verläuft, durch die betreffende Aussparung 22 hindurch so weit nach unten zu verschieben, bis er in eine von den seitlichen Ausnehmungen 26 der unteren Lagerschale 2 eindringt. Durch entsprechendes Verdrehen der Gesamtanordnung mit Hilfe des Lenkers ist es möglich, die jeweils gewünschte Ausnehmung 26 in die Schieberichtung des Sperrzapfens, d.h. in Verlängerung dessen Mittellängsachse zu bringen. Hiermit ist die jeweilige Lage des Lenkers mit Lenkstange und Lenksäule zum Rahmenrohr mit Gabel fixiert. Dabei kann man wahlweise erreichen, daß die jeweilige Sperrlage entweder bei einem in Längsrichtung des Rades verlaufenden Vorderrad oder auch bei einem schräg dazu stehenden Vorrades gegeben ist. Die Ausgestaltung und Funktion des Sperrzapfens verringern in Radialrichtung betrachtet die Abmessungen der Kontermutter. Sie ergeben ferner im Zusammenwirken mit den Ausnehmungen 22 der oberen Lagerschale 2 eine weitere Fixierung der Position der Kontermutter zur Position der oberen Lagerschale in dem Sinne, daß diese beiden Bauteile sich in ihrer Umfangsrichtung betrachtet nicht relativ zu einander verdrehen können. In dieser Sperrlage ist also durch den Sperrzapfen auch eine weitere Verdrehsicherung der Kontermutter zu den beiden Lagerschalen gegeben.

Alle dargestellten und beschriebenen Merkmale sowie ihre Kombinationen untereinander sind erfindungswesentlich.

## Patentansprüche

1. Diebstahlsicherung für ein oder an einem Fahrrad, dessen Vorderradgabel an einer in einem vorderen Rahmenrohr (1) gelagerten Lenksäule (4) befestigt ist, mit einem am Fahrrad fest montierten Schloß (13), das in gesperrtem Zustand die Relativbewegung zwischen Rahmenrohr (1) und Lenksäule (4) durch eine formschlüssig in eine Ausnehmung (15) eingreifende Sperrklinke (14, 23) verhindert, wobei das Schloß am oberen Ende des die Lenksäule lagernden Rahmenrohres und zusammen mit dem Lenksäulenlager montiert ist, das zwei Lagerschalen (2, 6) aufweist, von denen die obere Lagerschale (6) drehfest an der Lenksäule (4) und die untere Lagerschale (2) drehfest am Rahmenrohr (1) gehalten oder befestigt ist und wobei ferner eine Kontermutter (5) vorgesehen ist, die auf ein Gewinde (8) der Lenksäule aufgeschraubt ist und die obere Lagerschale in ihrer Betriebsstellung festhält und gegen eine etwaige Verdrehung sichert, dadurch gekennzeichnet, daß das Schloß (13) funktionsmäßig zwischen der Kontermutter (5) und der unteren Lagerschale (2) vorgesehen ist, so daß es in seiner Sperrstellung die Kontermutter und die untere Lagerschale gegen eine Relativverdrehung zueinander um die Längsachse (A-A) der Lenksäule (3) blockiert.

2. Diebstahlsicherung nach Anspruch 1, dadurch gekennzeichnet, daß der die Sperrklinke (14, 23) betätigende Schließmechanismus (13') des Schlosses (13) an der Kontermutter (5) befestigt ist und daß sich die Ausnehmung, bevorzugt mehrere Ausnehmungen (15, 26) in der unteren Lagerschale (2) befinden.

3. Diebstahlsicherung nach Anspruch 2, dadurch gekennzeichnet, daß mehrere Ausnehmungen (15, 26) gleichmäßig über den Umfang der unteren Lagerschale (2) verteilt vorgesehen sind.

4. Diebstahlsicherung nach Anspruch 2 oder 3, dadurch gekennzeichnet, daß die Ausnehmungen (15) in Radialrichtung der unteren Lagerschale (2) nach außen hin offen sind.

5. Diebstahlsicherung nach einem oder mehreren der Ansprüche 2 bis 4, dadurch gekennzeichnet, daß die Sperrklinke (14) des Schließmechanismusses (13') mit dessen Verstellung sich auf einem Kreisbogen bewegt und in Radialrichtung der unteren Lagerschale (2) nach innen in die Sperrlage in der betreffenden Ausnehmung (15) verschwenkbar ist.

6. Diebstahlsicherung nach einem oder mehreren der Ansprüche 1 bis 4, dadurch gekennzeichnet, daß die Sperrklinke als Sperrzapfen (23) ausgebildet ist, wobei dieser Sperrzapfen (23) des Schlosses (24) in einer zur Längsachse (A-A) der Lenksäule und der Kontermutter parallelen Richtung (25) von der Kontermutter her nach unten in seine Schließlage in eine von Ausnehmungen (26) der unteren Lagerschale (2) bringbar ist.

7. Diebstahlsicherung nach Anspruch 6, dadurch gekennzeichnet, daß die obere Lagerschale (6) ebenfalls Ausnehmungen (22) aufweist, die über einen Kreisumfang verteilt angeordnet sind, wobei der radiale Abstand dieser Ausnehmungen von der vogenannten Längsachse (A-A) auf den radialen Abstand der Mittellängsachse des Sperrzapfens (23) von der vorgenannten Längsachse (A-A) so abgestimmt ist, daß der Sperrzapfen in eine dieser Ausnehmungen einschiebbar ist.

8. Diebstahlsicherung nach einem oder mehreren der Ansprüche 1 bis 7, dadurch gekennzeichnet, daß die Kontermutter (5) das Schloß (13) gehäuseartig umgibt, wobei bevorzugt die Seitenwand (17, 18) der Kontermutter (5) so lang ausgebildet ist, daß sie die Lagerschalen (2, 6), insbesondere die untere Lagerschale (2), und das Schloß (13) oberseitig und seitlich abdeckt.

9. Diebstahlsicherung nach Anspruch 7 oder 8, dadurch gekennzeichnet, daß die Kontermutter eine Auswälbung (16) für die Positionierung der Sperrklinke (14) in der Freigabestellung des Schlosses aufweist.

10. Diebstahlsicherung nach einem oder mehreren der Ansprüche 1 bis 9, dadurch gekennzeichnet, daß die Kontermutter (5) mit Reibschluß auf einer Beilagscheibe (10) aufliegt, die mit ihrer anderen Seite an einer Gegenfläche der oberen Lagerschale (6) anliegt, wobei bevorzugt die Beilagscheibe (10) mit einem Vorsprung (11) in einer Aussparung (12) der Lenksäule (4) eingreift.

11. Diebstahlsicherung nach einem oder mehreren der Ansprüche 1 bis 9, dadurch gekennzeichnet, daß entweder der untere Bereich der Kontermutter (5) oder ein von der Kontermutter betätigtes Druckmittel (27) den oberen Bereich (28) der oberen Lagerschale (6) umgibt und in der Betriebsstellung mit Preßsitz in etwa radialer Richtung nach innen drückt und fest an die Lenksäule (4) klemmt.

12. Diebstahlsicherung nach Anspruch 11, dadurch gekennzeichnet, daß der obere Bereich (28) der oberen Lagerschale (6) Einschnitte (29) und/oder geschwächte Querschnitte (30) aufweist.

13. Diebstahlsicherung nach Anspruch 12, dadurch gekennzeichnet, daß der obere Bereich (9) der oberen Lagerschale (6) mit mehreren sich von seiner Stirnfläche (31) her etwa parallel zur Längsachse (A-A) der Lenkstange (3) und der Diebstahlsicherung erstreckenden Einschnitten (29) versehen ist, wobei mehrere Einschnitte (29) und damit eine entsprechende Anzahl von Segmenten (32) über den Umfang des oberen Bereiches (28) der oberen Lagerschale verteilt vorgesehen sind.

14. Diebstahlsicherung nach Anspruch 13, dadurch gekennzeichnet, daß etwa vier bis sechs, kreisbogenförmig verlaufende Segmente (32) vorgesehen sind.

15. Diebstahlsicherung nach einem oder mehreren der Ansprüche 12 bis 14, dadurch gekennzeichnet, daß von dem unteren Ende der Einschnitte (29) her sich weitere Schlitze (33) in Umfangsrichtung in die Segmente (29) erstrecken, wobei die Schlitze (33) zwischen sich relativ schmale Verbindungsstege (30) zwischen dem jeweiligen Segment und dem unteren Bereich (34) der oberen Lagerschale (6) einschließen.

16. Diebstahlsicherung nach einem oder mehreren der Ansprüche 11 bis 15, dadurch gekennzeichnet, daß auch der obere Bereich (28) der oberen Lagerschale (6) an seiner Innenseite mit dem Innengewinde (36) der oberen Lagerschale versehen ist, das mit dem Außengewinde (8) der Lenksäule (4) in Eingriff steht.

17. Diebstahlsicherung nach einem oder mehreren der Ansprüche 11 bis 16, dadurch gekennzeichnet, daß zwischen der Kontermutter (5, 5') oder dem Druckmittel (27) einerseits und dem oberen Bereich (28) der oberen Lagerschale (6) andererseits zumindest eine sich konisch verjüngende Anlagefläche vorgesehen ist, wobei die Konizität so verläuft, daß mit dem Aufschrauben der Kontermutter in die Betriebsstellung auf den oberen Bereich (28) der oberen Lagerschale der etwa radial nach innen gerichtete (35) Druck ausgeübt wird.

18. Diebstahlsicherung nach Anspruch 17, dadurch gekennzeichnet, daß als Druckmittel ein Spannring (27) vorgesehen ist, der mit einer sich konisch nach unten erweiternden Innenwand (27') an der sich entsprechend konisch nach oben verjüngenden Außenwand (28') des oberen Bereiches (28) der oberen Lagerschale (6) anliegt und daß die Kontermutter auf der oberen Stirnfläche (37) des Spannringes (27) aufliegt, während der Spannring sich mit seiner unteren Stirnfläche auf einer entsprechenden Gegenfläche der oberen Lagerschale (6) abstützt.
